# EUROPEAN PATENT APPLICATION

(11) **EP 2 015 388 A1**
(43) Date of publication of application: **14.01.2009**
(21) Application number: 06722351.1
(22) Date of filing: 17.04.2006
(51) Int. Cl.: H01M 10/40, H01M 2/02

(54) **LIQUID STATE LITHIUM ION BATTERY WITH ALUMINUM-PLASTIC COMPLEX FILM**

(71) Applicant: Citic Guoan Mengguli New Energy Technology Co., Ltd., Changping District Beijing 102200 (CN)
(72) Inventor: MAO, Yongzhi, Beijing 102200 (CN); YAN, Jianzhong, Beijing 102200 (CN); AN, Ping, Beijing 102200 (CN); CHEN, Hui, Beijing 102200 (CN); QI, Lu, Beijing 102200 (CN)
(74) Representative: Van kan, Johan Joseph Hubert
(86) International application number: PCT/CN2006/000702
(87) International publication number: WO 2007/118357

(57) **Abstract**

A liquid state lithium ion battery with aluminum-plastic complex film includes an electrode assembly made up of anodes (1), cathodes (2) and diaphragms (3); electrolyte and aluminum-plastic complex film (4), wherein the electrode assembly is surrounded by frame (5), and the frame (5) is formed by injection mold with shaped electrode assemblies as mould.

## Description

### Field of the Invention

The invention relates to a battery, especially, to a liquid state lithium ion battery with aluminum-plastic complex film.

### Background of the Invention

Generally, a liquid state lithium ion battery with aluminum-plastic complex film is placed into the bag made up of aluminum-plastic complex film after electrode assembly is shaped, inject liquids, and manufacture a liquid state lithium ion battery with aluminum-plastic complex film by vacuum heat-sealing. The disadvantage is that the thickness of the battery simultaneously changes as crystal lattice of electrode material changes during charging and discharging process, leading to change the distance between anode and cathode, and the performance of the battery quickly falls down. Although there is an atmospheric pressure outside the battery to slow the change, the effect is too small, especially if there is some gas in battery, the pressure will disappear. Philips Company (Holland) adopts the method of adding polymer rivet between pole pieces to solve the problem; while Sony Company (Japan) adds glue between pole pieces to adhere the pole pieces together instead to solve the problem. But there are still detects which include that these methods to make batteries are too complicated, the yield of products is too small, output power of battery is too small and it costs too much and so on. Some patents provided to add solid fixed frame outside the electrode assembly to solve this problem, but metal solid fixed frame is easy to pierce the aluminum-plastic complex film during manufacturing and operating process, and it is easy to happen that when electrode assembly is put into metal or solid fixed frame of organic matter it will break electrode assembly because of friction, so as to decrease yield of battery products.

### Summary of the Invention

The object of the invention is to provide a liquid state lithium ion battery with aluminum-plastic complex film to overcome the above shortcomings and defects of the prior art, and improve the performance of products, tend to manufacture continuously and mechanically, and get a high yield.
The object of the invention can be realized by:
A liquid state lithium ion battery with aluminum-plastic complex film includes an electrode assembly made up of anodes (1), cathodes (2) and diaphragms (3), electrolyte and aluminum-plastic complex film (4), characterizing that the electrode assembly is surrounded by frame (5), and the frame (5) is formed by injection mold with shaped electrode assemblies as mould; the said frame is formed by polycomponent such as reshaping polypropylene or reshaping polyethylene by injection mold, surrounding the surface of electrode assembly; the tempreture of forming the said frame by injection mold prefers 40-80°C.
To compare the invention with the prior art, using above battery can obtain advantages and effects including stable performance of the battery, being easy to manufacture it continuously and mechanically, and getting a high yield.

### Brief Description of the Drawings

FIG. 1 is a schematic view of the structure of a liquid state lithium ion battery with aluminum-plastic complex film according to the invention.
FIG. 2 shows the relationship between discharge capacity and cycle times during the circling process that the liquid state lithium ion battery with aluminum-plastic complex film of the invention charges and discharges with 0.5C.
FIG. 3 shows the relationship between discharge capacity and cycle times during the circling process that the comparing liquid state lithium ion battery with aluminum-plastic complex film charges and discharges with 0.5C.

### Description of the Preferred Embodiment

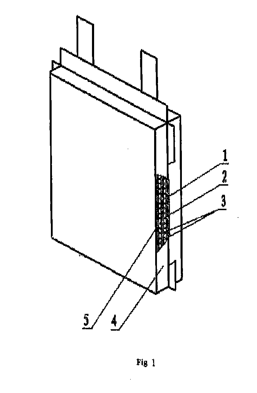

A liquid state lithium ion battery with aluminum-plastic complex film, preferring to FIG. 1, includes an electrode assembly made up of anodes (1), cathodes (2) and diaphragms (3); electrolyte and aluminum-plastic complex film (4). The electrode assembly is surrounded by frame (5), functioning to fix the electrode assembly of the battery, and maintain the distance between anodes and cathodes of the battery in allowed range during charge and discharge process, so as to decrease the distortion of the battery, and to improve the performance of the battery that even if there is a little gas inside the battery, the performance of the battery can be well maintained. The frame is formed by injection mold with the electrode assembly of the battery as mould. After shaped and took out of the mould, the frame and the electrode assembly integrate together, and is put into aluminum-plastic complex film, inject electrolyte and make the liquid state lithium ion battery with aluminum-plastic complex film by vacuum heat sealing. Thus it can avoid that when electrode assembly of battery is put into solid fixed frame made of metal or organic matter, electrode assembly tend to be broken because of friction in prior patents' methods, but also avoid that it appears a problem of yield of battery products decreasing owing to the mismatching between solid fixed frame and electrode assembly of the battery because of errors in prior patents' methods. The temperature of shaping the frame prefers 40-80 °C, so it can avoid the distortion of diaphragm inside electrode assembly during shaping frame process, as to appear shorts of electrode assembly or to change the diaphragm's structure.

### Example 1

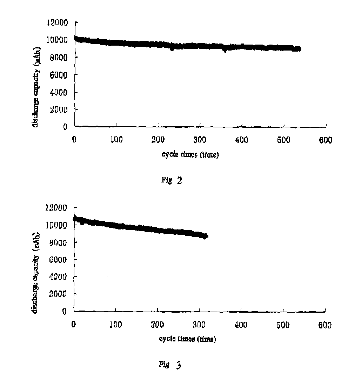

In order to make 1882130 (18mm thickness × 82mm width ×30mm height) battery, we use matters and conditions below, wherein positive matter of the anode is LiMn₂O, positive matter of the cathode is graphite, diaphragm material is PE, leading salt of the electrolyte is LiPF₆ (1M), solvents are EC, EMC and DMC (1:1:1 by volume). Electrode assembly is put into mould, then the mould is heated to 60°C, inject reshapingpolyethylene into the mould, cool down to 35°C quickly. Take off the mould, and the electrode assembly with frame is placed into aluminum-plastic complex film, inject the electrolytes, then use 0.2C current to charge and discharge 3 times, with the cut-off voltage of charge is 4.3V and the cut-off voltage of discharge is 3.0V. The relationship between discharge capacity of battery and cycle times refers to FIG. 2. The battery without above frame outside the electrode assembly of the battery, i.e. the comparing liquid state lithium ion battery with aluminum-plastic complex film, uses 0.5C current to charge and discharge, with the cut-off voltage of charge is 4.3V and the cut-off voltage of discharge is 3.0V. The relationship between discharge capacity of battery and cycle times refers to FIG. 3.

As seen from FIG. 2 and FIG. 3, when the battery experienced 300 circles of charge and discharge, the capacity maintenance rate of the comparing liquid state lithium ion battery with aluminum-plastic complex film is 83%, while the capacity maintenance rate of the liquid state lithium ion battery with aluminum-plastic complex film according to the invention is 92%, and when experienced 500 circles the capacity maintenance rate is 90%. Therefore, the operating stability of the liquid state lithium ion battery with aluminum-plastic complex film according to the invention, i.e. circling life, has been remarkably improved.

In conclusion, comparing with the prior art, the liquid state lithium ion battery with aluminum-plastic complex film according to the invention made by the above method has advantages of stable performance, being easy to manufacture continuously and mechanically, and a high yield of products.

## Claims

1. A liquid state lithium ion battery with aluminum-plastic complex film, includes an electrode assembly made up of anodes (1), cathodes (2) and diaphragms (3); electrolyte and aluminum-plastic complex film (4), charactering that the electrode assembly is surrounded by frame (5), and the frame is formed by injection mold with electrode assembly as mould.

2. The battery of claim 1, charactering that the frame is made up of polycomponent organic matter by injection mold with electrode assembly as mould.

3. The battery of claim 2, charactering that the said polycomponent organic matter is reshaping polypropylene or reshaping polyethylene.

4. The battery of claim 1, charactering that the said temperature of shaping the frame by injection mould is between 40-80°C.
